# EUROPÄISCHE PATENTSCHRIFT

(11) **EP 1 400 006 B1**
(45) Veröffentlichungstag und Bekanntmachung des Hinweises auf die Patenterteilung: **23.02.2005**
(21) Anmeldenummer: 02747351.1
(22) Anmeldetag: 06.06.2002
(51) Int. Cl.: H02K 41/03

(54) **SEKUNDÄRTEIL FÜR LINEARMOTOR MIT KÜHLUNG**
SECONDARY PART FOR A LINEAR MOTOR WITH A COOLING SYSTEM
ELEMENT SECONDAIRE DESTINE A UN MOTEUR LINEAIRE ET DOTE D'UN SYSTEME DE REFROIDISSEMENT

(30) Priorität: 28.06.2001 DE 10131118
(43) Veröffentlichungstag der Anmeldung: 24.03.2004
(73) Patentinhaber: SIEMENS AKTIENGESELLSCHAFT, 80333 München (DE)
(72) Erfinder: HOPPE, Thomas, 85247 Schwabhausen/Stetten (DE)
(86) Internationale Anmeldenummer: PCT/EP2002/006244
(87) Internationale Veröffentlichungsnummer: WO 2003/003549

## Beschreibung

Die Erfindung bezieht sich auf Sekundärteile für Linearmotoren, insbesondere Synchronlinearmotoren.

Derartige Linearmotoren umfassen ein Primärteil, in dem mehrere Spulen linear angeordnet sind, und ein Sekundarteil, in dem mehrere Permanentmagnete entsprechend dem Polteilungsmaß des Primärteils linear angeordnet sind. Das Primärteil wird mit elektrischer Energie gespeist und wirkt mit dem Sekundärteil über einen Luftspalt zusammen.

Im Betrieb wird ein Teil der elektrischen Energie im Primärteil in Wärme umgewandelt, und es ist bekannt, das Primärteil über Kühlschlangen zu kühlen, wobei die Kühlschlangen in der Regel auf der den Spulen abgewandte Seite des Primärteils angebracht sind.

Die Sekundärteile bestehen in der Regel aus einer metallischen Trägerplatte, auf der die Permanentmagnete angeordnet sind, wobei die Permanentmagnete in eine Vergußmasse eingebettet sein können (DE-A-19936064).

Im Betrieb heizen sich die Sekundärteile ebenfalls auf, sei es durch die elektromagnetische Wechselwirkung mit dem Primärteil, sei es durch Abstrahlung von Wärme vom Primärteil auf das Sekundärteil.

Zwar ist es möglich, an der Metallplatte des Sekundärteils ebenfalls ein Kühlrohr anzubringen; dies erfordert jedoch aufwendige Montageschritte zur Befestigung des Kühlrohrs und ggf. Bohr- und/oder Fräsarbeiten an der Trägerplatte.

Dementsprechend liegt der Erfindung die Aufgabe zugrunde, ein Sekundärteil bzw. einen Sekundärteilelement für ein Linearmotor anzugeben, das in einfacher Weise mit einer Kühleinrichtung versehen werden kann.

Die Lösung dieser Aufgabe erfolgt durch ein Sekundärteilelement gemäß den Merkmalen des Patentanspruchs 1 bzw. durch ein Sekundärteil gemäß Patentanspruch 5; die abhängigen Patentansprüche betreffen vorteilhafte Ausgestaltungen der Erfindung.

Erfindungsgemäß wird vorgeschlagen, in dem Vergußkörper des Sekundärteils Längsnuten zur Aufnahme von Kühlrohren vorzusehen. Diese Längsnuten können in einfacher Weise beim Vergießen des Sekundärteils ausgebildet werden, ohne daß weitere Bearbeitungen an der Trägerplatte des Sekundärteils vorgenommen werden müssen.

Dabei erstrecken sich die Nuten vorzugsweise in der Tiefe bis zur Oberfläche der Trägerplatte, um einen mindestens linearen mechanischen Kontakt zwischen Kühlrohren, die in die Nuten eingelegt werden, und der Oberfläche der Trägerplatte herzustellen.

Vorzugsweise entsprechen die Nuten im Querschnitt zumindest teilweise dem Querschnitt der Kühlrohre und die Nuten weisen Hinterschneidungen auf, so daß die Hinterschneidungen Rastmittel für die Kühlrohre bilden. In diesem Fall müssen die Kühlrohre lediglich in die Nuten "hineingeklipst" werden, d.h. sie Rasten in den Nuten ein, ohne daß weitere Befestigungsmittel erforderlich sind.

Die erfindungsgemäße Anordnung ist insbesondere für Sekundärteile geeignet, die aus mehreren Sekundärteilelementen zusammengesetzt werden. In diesem Fall werden die Nuten zueinander fluchtend ausgerichtet, und einstückige Kühlrohre können in allen Nuten der aneinandergereihten Segmente eingelegt werden.

Ein Ausführungsbeispiel der Erfindung wird anhand der beigefügten Zeichnungen erläutert. Es zeigt:
Fig. 1 einen Querschnitt durch ein Sekundärteilsegment
Fig. 1a einen Detailquerschnitt und
Fig. 2 eine Draufsicht auf ein Sekundärteil aus zwei Sekundärteilsegmenten.

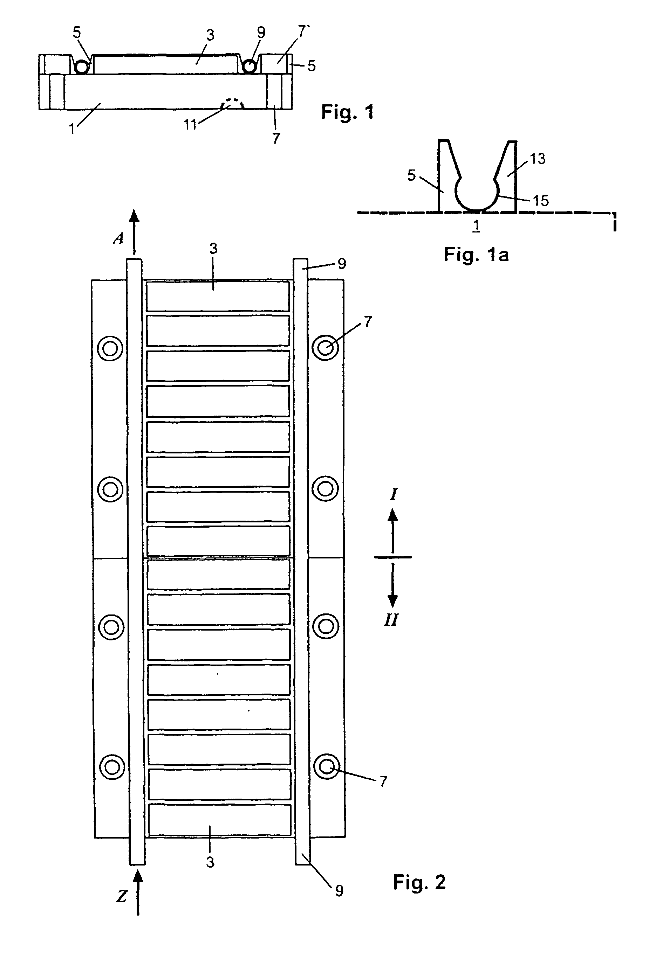

Wie aus den Figuren 1 und 2 ersichtlich ist, sind in an sich bekannter Weise auf einer Trägerplatte 1 aus magnetisierbarem Material Permanentmagnete 3 linear nebeneinander angeordnet.

Die Permanentmagnete 3 sind in einen an die Trägerplatte 1 angegossenen Vergußkörper 5 eingegossen, wobei in der Trägerplatte Befestigungsbohrungen 7 zur Fixierung des Sekundärteils bzw. entsprechende Ausnehmungen 7' im Vergußkörper vorgesehen sind.

Im Bereich zwischen den Ausnehmungen 7' und den Permanentmagneten 3 weist der Vergußkörper Nuten auf, die sich entlang der Aneinanderreihung von Magneten längs des Sekundärteilelementes erstrecken. Die Längsnuten sind so ausgebildet, daß sie zumindest über einen Teil ihres Querschnitts Kühlrohre 9 formschlüssig aufnehmen können.

Für den Fall eines runden Querschnitts für die Kühlrohre 9 ist eine mögliche Form der Nuten in Fig. la dargestellt.

So zeigt Fig. la eine teilweise kreisförmige Nut 15 in dem Vergußkörper 5 mit Hinterschneidungen 13.

Wie aus der Fig. la ferner ersichtlich ist, erstreckt sich die Nut in der Tiefe vorzugsweise bis zur Oberfläche der Trägerplatte 1, so daß ein in die Nut eingebrachtes (eingerastetes) Kühlrohr mechanisch mit der Trägerplatte zumindest linear in Kontakt ist.

Die erfindungsgemäße Anordnung ist insbesondere für Sekundärteile geeignet, die aus mehreren Sekundärteilelementen zusammengesetzt sind. Dies ist insbesondere aus der Fig. 2 ersichtlich, die zwei Sekundärteilelemente I, II zeigt. Dabei werden die Sekundärteilelemente so angeordnet, daß die Nuten miteinander fluchten, und anschließend werden Kühlrohre in die Nuten eingerastet, wobei sie durch die Hinterschneidungen 13 am Ort gehalten werden. Zur Kühlung wird den Kühlrohren über einen Zufluß Z Kühlmittel zugeführt, das die Sekundärteilelemente I, II passiert und über einen Abfluß A abgezogen wird.

Zwar ist Vergußmasse wie Polyurethan oder Epoxyharz grundsätzlich ein schlechter Wärmeleiter, die vorgeschlagene Ausgestaltung hat jedoch im Hinblick auf Alternativlösungen wesentliche Vorteile.

So könnte man daran denken, am Boden der Trägerplatte 1 Ausnehmungen 11 zur Aufnahme von Kühlrohren vorzusehen, was aber, wie eingangs erwähnt, aufwendige Bearbeitungsschritte erfordert. Zudem sind diese Ausnehmungen entfernt von den Permanentmagnet 3 und entfernt von dem Primärteil als Wärmequelle angeordnet; die Wärme muß somit die gesamte Dicke der Trägerplatte passieren.

Auch könnte man daran denken, an den Befestigungselementen (nicht dargestellt), die in die Ausnehmungen 7', 7 eingebracht werden, ein Kühlrohr zu befestigen. Aber auch hier besteht das Problem, daß das Kühlrohr entfernt von den Permanentmagneten bzw. der Wärmequelle Primärteil angeordnet sind und somit Wärme ebenfalls die Trägerplatte durchdringen muß.

Demgegenüber kann erfindungsgemäß sichergestellt werden, daß die Kühlrohre 9 zumindest in linearem Kontakt mit der Trägerplatte 1 stehen, und zwar unmittelbar neben dem Permanentmagneten 3. Zudem sind die Nuten 15 zum Luftspalt hin geöffnet, so daß die Kühlrohre 9 zur Wärmequelle Primärteil hin freiliegen und somit direkt Wärmestrahlung vom Primärteil aufnehmen können.

## Patentansprüche

1. Sekundärteilelement für einen Linearmotor mit einer Trägerplatte (1), die mehrere Permanentmagnete (3) trägt, wobei die Permanentmagnete (3) in einem Vergußkörper (5) auf der Träger-platte (1) eingebettet sind, **dadurch gekennzeichnet, daß** der Vergußkörper (5) Längsnuten (15) zur Aufnahme von Kühlrohren (9) aufweist.

2. Sekundärteilelement nach Anspruch 1, **dadurch gekennzeichnet, daß** sich die Nuten (15) in der Tiefe bis zur Oberfläche der Trägerplatte (1) erstrecken.

3. Sekundärteilelement nach Anspruch 1 oder 2, **dadurch gekennzeichnet, daß** die Nuten (15) Hinterschneidungen (13) aufweisen.

4. Sekundärteilelement nach einem der Ansprüche 1 bis 3, **dadurch gekennzeichnet, daß** die Hinterschneidungen (13) Rastmittel bilden.

5. Sekundärteil aus mehreren aneinandergereihten Sekundärteilelementen (I, II) nach einen der vorstehenden Ansprüche, **dadurch gekennzeichnet, daß** die Nuten (15) zueinander fluchtend ausgerichtet sind und in die fluchtenden Nuten (15) einstückige Kühlrohre (9) aufgenommen sind.

## Claims

1. Secondary part element for a linear motor with a carrier plate (1) for support of several permanent magnets (3), wherein the permanent magnets (3) are embedded in a cast body (5) upon the carrier plate (1), **characterised in that** the cast body (5) has longitudinal grooves (15) for receiving cooling pipes (9).

2. Secondary part element according to Claim 1, **characterised in that** the grooves (15) have a depth extending up to the surface of the carrier plate (1).

3. Secondary part element according to Claim 1 or 2, **characterised in that** the grooves (15) have undercuts (13).

4. Secondary part element according to one of the Claims 1 to 3, **characterised in that** the undercuts (13) have locking means.

5. Secondary part comprised of several juxtaposed secondary part elements (I, II) according to one of the preceding Claims, **characterised in that** the grooves (15) are arranged in aligned relationship, and single-piece cooling pipes (9) are received in the aligned grooves (15).

## Revendications

1. Elément de partie secondaire d'un moteur linéaire ayant un plateau (1) support, qui porte plusieurs aimants (3) permanents, les aimants (3) permanent étant incorporés dans une pièce (5) de scellement sur le plateau (1) support, **caractérisé en ce que** la pièce (5) de scellement a des rainures (15) longitudinales de réception de tuyaux (9) de refroidissement.

2. Elément de partie secondaire suivant la revendication 1, **caractérisé en ce que** les rainures (15) s'étendent dans la profondeur jusqu'à la surface du plateau (1) support.

3. Elément de partie secondaire suivant la revendication 1 ou 2, **caractérisé en ce que** les rainures (15) ont des contre-dépouilles (13).

4. Elément de partie secondaire suivant l'une des revendications 1 à 3, **caractérisé en ce que** les contre-dépouilles (13) forment des moyens d'encliquetage.

5. Partie secondaire constituée de plusieurs éléments (I, II) de partie secondaire mises à la file suivant l'une des revendications précédentes, **caractérisé en ce que** les rainures (15) sont alignées et des tuyaux (9) de refroidissement d'un seul tenant sont reçus dans les rainures (15) alignées.
